Europäisches Patentamt

European Patent Office

Office européen des brevets

(19)

(11) **EP 0 646 704 B1**

(12) **EUROPÄISCHE PATENTSCHRIFT**

(45) Veröffentlichungstag und Bekanntmachung des Hinweises auf die Patenterteilung:
**26.11.1997 Patentblatt 1997/48**

(51) Int Cl.⁶: **F02C 6/00**

(21) Anmeldenummer: 93114229.3

(22) Anmeldetag: **06.09.1993**

(54) **Verfahren zur Regelung einer mit zwei Brennkammern bestückten Gasturbogruppe**

Method for controlling a gas turbine plan equipped with two combustion chambers

Procédé de régulation d'une installation pour turbine à gaz équipée de deux chambres de combustion

(84) Benannte Vertragsstaaten:
**DE FR GB IT NL**

(43) Veröffentlichungstag der Anmeldung:
**05.04.1995 Patentblatt 1995/14**

(73) Patentinhaber: **ASEA BROWN BOVERI AG**
**5400 Baden (CH)**

(72) Erfinder: **Frutschi, Hans Ulrich**
**CH-5223 Riniken (CH)**

(56) Entgegenhaltungen:
**US-A- 2 225 311        US-A- 3 054 257**

**Beschreibung**

Technisches Gebiet

Die vorliegende Erfindung betrifft ein verfahren gemäss Oberbegriff des Anspruchs 1.

Stand der Technik

Bei einer Gasturbogruppe mit zwei Brennkammern, wie zum Beispiel in Dokument US-A-2 225 311 gezeigt, wobei die eine hochdruckseitig und die andere niederdruckseitig wirkt, müsste die regelbedingte unabdingbare zumessung der beiden Brennstoffmengen für die HD-Brennkammer und die ND-Brennkammer so erfolgen, dass mindestens die Austrittstemperaturen der beiden jeweils stromab gelegenen Turbinen, besonders die bestimmungsgemäss sehr hohe Austrittstemperatur aus der HD-Turbine, welche von den Heissgasen der HD-Brennkammer beaufschlagt wird, direkt erfasst werden müssten. Wie angezeigt, ist eine solche Temperaturerfassung schwierig zu erstellen, ihre Reproduzierbarkeit nicht gesichert, so dass eine sichere Brennstoff-Regelung anhand solcher Messungen nicht gewährleistet ist.

Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art die Erfassung von zur Regelung unabdingbaren Temperaturen an Orten erfolgen zu lassen, wo eine sichere technische Realisierung und Wiederholbarkeit gegeben ist.

Die wesentlichen Vorteile der Erfindung sind darin zu sehen, dass das Regelkonzept auf den Stand der Technik aufbaut, so dass lediglich die gut zu erfassende Austrittstemperatur aus der ND-Turbine gemessen werden muss. Die Messung der zusätzlich erforderlichen Drücke nach dem Verdichter und nach der HD-Turbine erfolgen nach bekannten Prinzipien, wie sie aus dem Stand der Technik bekanntgeworden sind, womit davon ausgegangen werden darf, dass diesbezüglich keine Schwierigkeiten zu entstehen vermögen.

Dabei geht das erfindungsgemässe Verfahren zur Regelung einer oben zugrundegelegten Gasturbogruppe davon aus, dass die Temperaturerhöhung am Austritt der ND-Turbine, bedingt durch die Befeuerung der ND-Brennkammer, wiederholbar bestimmt werden kann. Davon ausgehend, lässt sich sonach ein einfaches und sicheres Regelkonzept für die Brennstoffzumessung in die beiden Brennkammern erstellen. Anwendungsgemäss lässt sich dies so realisieren, dass das zu erwartende $\Delta T$-Signal von der gemessenen ND-Turbinen-Austrittstemperatur in Abzug gebracht und so die HD-Brennstoffmenge geregelt wird. Die Regelung der ND-Brennstoffmenge geschieht direkt mit dem Temperatur-Signal am Austritt der ND-Turbine.

Vorteilhafte und zweckmässige Weiterbildungen der erfindungsgemässen Aufgabenlösung sind im abhängigen Anspruch 2 gekennzeichnet.

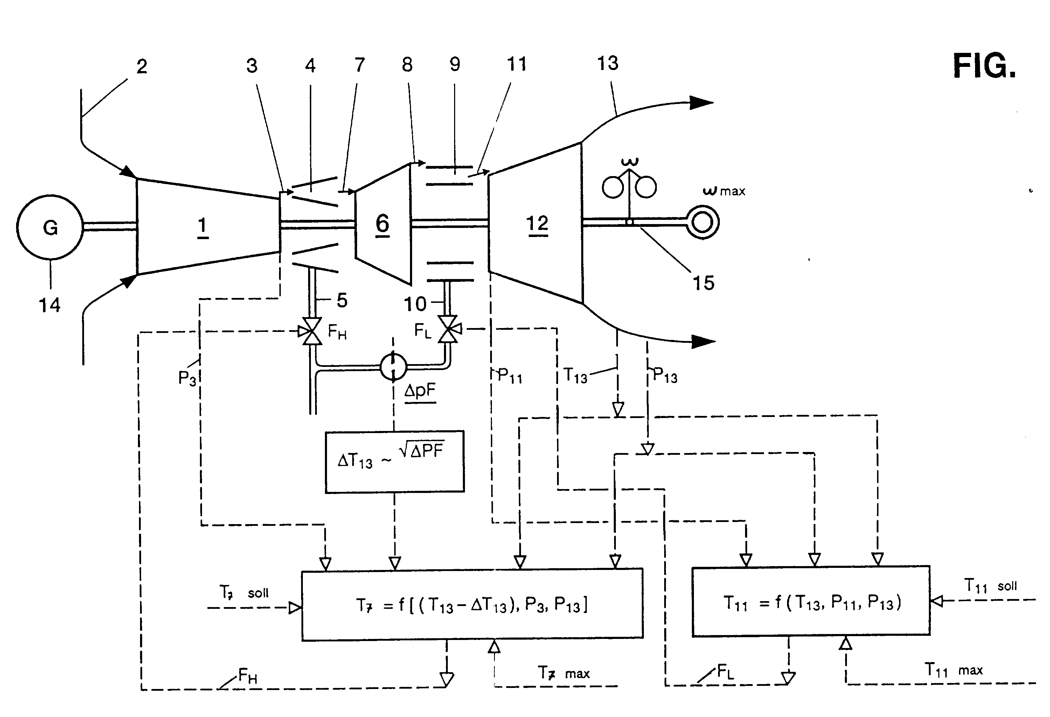

Im folgenden wird anhand der Zeichnung ein Ausführungsbeispiel der Erfindung näher erläutert. Alle für das unmittelbare Verständnis der Erfindung nicht erforderlichen Elemente sind fortgelassen. Die Strömungsrichtung der Medien und Regelimpulse innerhalb des gezeigten Beispiels sind mit Pfeilen angegeben.

Kurze Beschreibung der Zeichnung

Die einzige Figur zeigt eine Gasturbogruppe mit einem integrierten Regelungsschema.

Wege zur Ausführung der Erfindung, gewerbliche Verwertbarkeit

Die Figur zeigt eine Gasturbogruppe, welche weiter unten Grundlage für die zur Anwendung gelangende Brennstoff-Regelung bildet. Diese Gasturbogruppe weist eine Verdichtereinheit 1 auf, in welcher die Kompression der angesaugten Luft 2 stattfindet. Die so verdichtete Luft 3 strömt sodann in eine erste Brennkammer, HD-Brennkammer 4, in welcher die Bereitstellung der ersten Heissgaserzeugung anhand eines Brennstoffes 5 stattfindet. Stromab dieser HD-Brennkammer 4 operiert eine erste Turbine, HD-Turbine 6, in welcher die in der HD-Brennkammer 4 bereitgestellten Heissgase 7 eine Teilentspannung erfahren. Diese Teilentspannung ist dadurch charakterisiert, dass die Abgase 8 aus der HD-Turbine 6 noch eine relativ hohe Temperatur, in der Grössenordnung von 1000 Grad C und mehr aufweisen. Dementsprechend besteht die genannte HD-Turbine 6 aus wenigen Laufschaufelstufen, vorzugsweise 1-3 Stufen. Stromab der HD-Turbine 6 wirkt eine zweite Brennkammer, ND-Brennkammer 9, welche nach einem Selbstzündungsprinzip funktioniert. Die ND-Brennkammer 9 hat im wesentlichen die Form eines durchströmten Ringkanals, in welchen vorzugsweise ein gasförmiger Brennstoff 10 eingedüst wird. Bei einer Temperatur der Abgase 8 aus der HD-Turbine auf obengenanntem Temperaturniveau findet in der ND-Brennkammer 9 eine Selbstzündung des eingedüsten Brennstoffes 10 statt. Diese ND-Brennkammer 9 weist nicht dargestellte Strömungshilfen auf, welche im Bereich der Flammenfront eine stabilisierende Rückströmung zur Gewährleistung eines sicheren Brennbetriebes bewerkstelligen. Die Abgase 8 werden demnach in der ND-Brennkammer 9 wieder zu Heissgasen 11 aufbereitet, deren Temperatur in etwa derjenigen der HD-Brennkammer 4 entspricht. Grundsätzlich weisen die Temperaturen der Heissgase 7, 11 keine unmittelbare thermodynamische Grenze auf; diese Grenze wird vielmehr und vordergründig durch die zu beaufschlagende Turbine und deren Maschinenelemente vorgegeben. Die Heissgase 11 beaufschlagen sodann eine zweite Turbine, ND-Turbine 12, in welcher zunächst die endgültige Entspannung stattfindet. Das kalorische Remanenz-Potential der Abgase 13 kann beispielsweise zur Dampf Dampferzeugung eines nachgeschalteten Dampfkreislaufes eingesetzt werden. Ein Generator 14 sorgt für die Stromerzeugung aus der Arbeitsleistung der beiden Turbinen 6, 12. Ein wesentliches Merkmal der gezeigten Gasturbogruppe ist die einheitliche Lagerung aller Strömungsmaschinen 1, 6, 12 auf einer durchgehenden Welle 15, welche vorzugsweise auf zwei nicht gezeigten Lagern abgestützt ist. Die beiden Brennkammern 4, 9 nehmen den intermediären Raum zwischen den beiden Turbinen 6, 12 ein, wobei die HD-Brennkammer 4 vorzugsweise als Ringbrennkammer ausgebildet ist, und weitgehend der Verdichtereinheit 1 übergelagert werden kann, dergestalt, dass dies wesentlich dazu beiträgt, die Gasturbogruppe zu einer kompakten Einheit werden zu lassen. Diese Möglichkeit lässt sich aus strömungstechnischen Ueberlegungen bezüglich der ND-Brennkammer 9 nicht ganz realisieren; immerhin ist hier zu sagen, dass die letztgenannte Brennkammer sehr kurz ausfällt, so dass das angestrebte Ziel, eine kompakte Gasturbogruppe zu realisieren, durchaus erreicht wird.

Die Gasturbogruppe wird während des Anfahrvorganges bis hin zum Betrieb mit halber Leistung lediglich durch Befeuerung der HD-Brennkammer betrieben. Anfänglich teilweise geschlossene Verdichterleitreihen sind sukzessiv zu öffnen. Die Regelung der Brennstoffmenge 5 für die HD-Brennkammer 4 geschieht in herkömmlicher Weise in Funktion der Temperatur T13 am Austritt der ND-Turbine 12 und des Verdichter-Enddruckkes p3 bzw. des Verdichter-Druckverhältnisses $\pi$ nach der Beziehung:

$$T7 = A(T13 - \Delta T13) + (B \cdot \pi) + C \qquad (1)$$

wobei A, B, und C die in üblicher Weise angepassten Korrekturglieder sind. $\Delta T13$ bleibt vorläufig noch 0.

Für die weitere Belastung der Maschine wird nun die Brennstoffzufuhr 10 zu der ND-Brennkammer 9 aktiviert, wobei deren Regelung durch eine zweite, herkömmliche Beziehung

$$T11 = (A' \cdot T13) + (B' \pi') + C' \qquad (2)$$

mit $\pi' = p11/p13$ übernommen wird.

Der sich aus dem Betrieb der ND-Brennkammer 9 bei konstant gehaltener Brennstoffmenge 5 der ND-Brennkammer 4 ergebende Temperaturanstieg $\Delta T13$ am Austritt aus der ND-Turbine 12 wird in die Beziehung (1) eingeführt, so dass die HD-Brennkammer 4 so geregelt wird, wie wenn die ND-Brennkammer 9 nicht in Betrieb wäre.

Die Richtigkeit des Wertes $\Delta T13$ kann anlässlich eines jeden An- oder Abfahrvorganges im Sinne einer Eichung festgestellt werden. Er kann auch durch eine kleine Aenderung der Brennstoffmenge 10 der ND-Brennkammer 9 um $\Delta mFL$ (Unterschied Massenstrom/Brennstoffmenge) jederzeit nachvollzogen werden. Diese Vorgehensweise setzt eine mindestens relative Messung der Brennstoffmenge 10 der ND-Brennkammer 9 voraus. Selbstverständlich kann $\Delta T13$ auch rechnerisch simuliert werden.

Um ein besonders gutes regelungstechnisches Uebergangsverhalten zu bekommen, ist es von Vorteil, die beiden Brennstoffmengen (HD + ND) mindestens durch ein Verdichter-Austrittsdruck p3 zu führen, also gemäss der Beziehungen

$$mFH \sim p3 \cdot K1 \qquad (3)$$

$$mFL \sim p3 \cdot K2 \qquad (4)$$

wobei die Faktoren K1 und K2, d.h.

$$mFH/p3 \qquad (5)$$

und

$$mFL/p3 \qquad (6)$$

durch die Beziehungen (1) und (2) laufend angepasst werden.

Der dargestellte Temperatur-Regelungsmodus kann auch für eine Leistungs- und Drehzahl-Regelung verwendet werden, wobei dann die beiden Tmax-Signale begrenzend auf die Brennstoffmengen 5, 10 einwirken.

Im Falle der Drehzahlregelung ($\omega = \omega soll$) wird im Normalfall nur die HD-Brennstoffmenge 5 bei gelöschter ND-Brennkammer 9 geregelt. Dies deshalb, weil grosse Maschinen praktisch nie für Inselbetrieb eingesetzt werden und die Drehzahlregelung lediglich für die Synchronisation gebraucht wird. Es ist aber auch möglich, nach Erreichen von T7 = T7soll das $\omega$-signal auf die ND-Brennstoffmenge 10 weiter wirken zu lassen.

Ungekehrt könnte man die Leistungsregelung P = Psoll nur auf die ND-Brennstoffmenge 10 wirken zu lassen, da selten unter Halblast gefahren wird. Es ist aber auch möglich, nach dem Löschen der ND Brennkammer 9 das P-signal auf die HD-Brennstoffmenge 5 hinüberzuleiten.

Integrierender Bestandteil der Beschreibung bildet die nachfolgende Bezeichnungsliste:

1　　　　Verdichtereinheit
2　　　　Angesaugte Luft
3　　　　Verdichtete Luft
4　　　　HD-Brennkammer
5　　　　HD-Brennstoffmenge

| | |
|---|---|
| 6 | HD-Turbine |
| 7 | Heissgase |
| 8 | Abgase |
| 9 | ND-Brennkammer |
| 10 | ND-Brennstoffmenge |
| 11 | Heissgase |
| 12 | ND-Turbine |
| 13 | Abgase |
| 14 | Generator |
| 15 | Welle |
| ω | Drehzahl |
| ω max | Maximale Drehzahl |
| FH | Brennstoff HD-Brennkammer |
| FL | Brennstoff ND-Brennkammer |
| $\Delta pF$ | Druckdifferenz Blende |
| p3 | Druck Verdichter-Austritt |
| p5 | Druck Brennstoff HD-Brennkammer |
| p11 | Druck Eintritt ND-Turbine |
| p13 | Druck Austritt ND-Turbine |
| T7 | Temperatur Eintritt HD-Turbine |
| T11 | Temperatur Eintritt ND-Turbine |
| T13 | Temperatur Austritt ND-Turbine |
| m | Brennstoffmenge |
| K1 | Konstante |
| K2 | Konstante |
| $\Delta T$ | Tem0peraturdifferenz (Anstieg) |

## Patentansprüche

1. Verfahren zur Regelung einer Gasturbogruppe, im wesentlichen bestehend aus einer Verdichtereinheit (1), aus einer ersten der Verdichtereinheit nachgeschalteten Brennkammer (4), einer der ersten Brennkammer nachgeschalteten ersten Turbine (6), einer dieser ersten Turbine nachgeschalteten, auf Selbstzündung operierenden zweiten Brennkammer (1), deren Heissgase eine zweite Turbine (12) beaufschlagen und aus mindestens einem Generator (14), dadurch gekennzeichnet, dass die Bemessung der Brennstoffmenge (FH) für die erste Brennkammer (4) durch ein korrigiertes Temperatursignal (T13 - $\Delta T$) bewerkstelligt wird, welches erfasst wird, indem der erzeugte Temperaturanstieg ($\Delta T$) durch die in die zweite Brennkammer (9) eingeführte Brennstoffmenge (FL) von der gemessenen Temperatur (T13) am Austritt der zweiten Turbine (12) in Abzug gebracht wird, und dass für die Bemessung der Brennstoffmenge (FL) für die zweite Brennkammer (9) das unkorrigierte Temperatursignal am Austritt der zweiten Turbine (12) verwendet wird.

2. Verfahren nach Anspruch 1, dadurch gekennzeichnet, dass sich der Temperaturanstieg ($\Delta T$) in Relation zur Brennstoffmenge (FH) für die erste Brennkammer (4) nach einer veränderbaren Funktion richtet.

## Claims

1. Method for regulating a gas-turbine assembly, essentially consisting of a compressor unit (1), of a first combustion chamber (4) downstream of the compressor unit, of a first turbine (6) downstream of the first combustion chamber, of a second combustion chamber (1) which is downstream of this first turbine and operates by auto-ignition and the hot gases of which load a second turbine (12), and of at least one generator (14), characterized in that the rating of the fuel quantity (FH) for the first combustion chamber (4) is carried out by means of a corrected temperature signal (T13 - $\Delta T$) which is recorded in that the temperature rise ($\Delta T$) generated by the fuel quantity (FL) introduced into the second combustion chamber (9) is subtracted from the measured temperature (T13) at the outlet of the second turbine (12), and in that the uncorrected temperature signal at the outlet of the second turbine (12) is used for rating the fuel quantity (FL) for the second combustion chamber (9).

2. Method according to Claim 1, characterized in that the temperature rise ($\Delta T$) in relation to the fuel quantity (FH) for the first combustion chamber (4) is governed by a variable function.

## Revendications

1. Procédé de régulation d'une installation de turbine à gaz, se composant essentiellement d'une unité de compresseur (1), d'une première chambre de combustion (4) disposée après l'unité de compresseur, d'une première turbine (6) disposée après la première chambre de combustion, d'une seconde chambre de combustion (9) fonctionnant par auto-allumage, disposée après cette première turbine, dont les gaz chauds alimentent une seconde turbine (12), et d'au moins un générateur (14), caractérisé en ce que l'adaptation du débit de combustible (FH) pour la première chambre de combustion (4) est mise en oeuvre par un signal de température. corrigé (T13 - $\Delta T$), qui est déterminé par le fait que l'augmentation de température produite ($\Delta T$) due au débit de combustible (FL) introduit dans la seconde chambre de combustion (9) est déduite de la température (T13) mesurée à la sortie de la seconde turbine (12), et en ce que l'on utilise, pour l'adaptation du débit de combustible (FL) pour la seconde chambre de combustion (9), le signal de température non corrigé à la sortie de la seconde turbine (12).

2. Procédé suivant la revendication 1, caractérisé en ce que l'augmentation de la température ($\Delta T$) s'aligne, suivant une fonction variable, en relation avec le débit de combustible (FH) pour la première chambre de combustion (4).

FIG.